# EUROPEAN PATENT SPECIFICATION

(11) **EP 3 819 888 B1**
(45) Date of publication and mention of the grant of the patent: **27.12.2023**
(21) Application number: 19207078.7
(22) Date of filing: 05.11.2019
(51) Int. Cl.: G06N 3/045, G08G 1/0967, G06N 3/08, G08G 1/16, G08G 1/01

(54) **VEHICLE SYSTEM OF A VEHICLE FOR DETECTING AND VALIDATING AN EVENT USING A DEEP LEARNING MODEL**
FAHRZEUGSYSTEM EINES FAHRZEUGS ZUM ERFASSEN UND VALIDIEREN EINES EREIGNISSES UNTER VERWENDUNG EINES TIEFENLERNMODELLS
SYSTÈME POUR UN VÉHICULE PERMETTANT DE DÉTECTER ET DE VALIDER UN ÉVÉNEMENT À L'AIDE D'UN MODÈLE D'APPRENTISSAGE PROFOND

(43) Date of publication of application: 12.05.2021
(73) Proprietor: Valeo Comfort and Driving Assistance, 94000 Créteil (FR)
(72) Inventor: TOMA, Ramez, 94046 Créteil Cedex (FR)
(74) Representative: Delaval, Guillaume Laurent

(56) References cited:
- EP-A1- 2 854 118
- WO-A1-2017/180382
- WO-A1-2018/057513
- WO-A1-2020/056331
- US-A1- 2016 370 801
- US-A1- 2018 349 782

## Description

### FIELD OF THE INVENTION

The present invention relates to a vehicle system of a vehicle configured to detect an event and to broadcast said event using a decentralized environmental notification message. Such a vehicle system may be used, but not exclusively, in a motor vehicle. It also relates to a server which cooperates with said vehicle system.

### BACKGROUND OF THE INVENTION

A vehicle system of a vehicle, well-known by the man skilled in the art, is used in an autonomous vehicle for exchanging information with other vehicles or infrastructures via a V2X communication. In a V2X communication, two types of messages are broadcasted. Some cooperative awareness messages, also referred as CAM messages, and some decentralized environmental notification messages, also referred as DENM messages. Some of the DENM messages are automatically triggered like DENM messages for events such as emergency braking, car crashed, or fog detection.

One problem of this prior art is that other DENM messages are manually generated. Those manually generated DENM messages are invoked by the driver to broadcast a certain event, such as an external accident, a road-block, etc. Human interface machines in the vehicle, such as a tablet, a LCD touch display, etc. are used by the driver to trigger these DENM messages. Hence, while driving, the driver has to manually trigger these DENM messages, which may lead to a reduction of his focus on the road and therefore to his own safety and the passenger's safety. Patent application document WO 2018/057513 A1 discloses a vehicle system for providing location specific assistance, configured to detect an abnormal event by using a primary in vehicle deep learning model and sending the event data to a secondary deep learning model of a server for updating the primary deep learning model.

### SUMMARY OF THE INVENTION

It is an object of the invention to provide a vehicle system of a vehicle configured to detect an event and to broadcast said event using a decentralized environmental notification message, which resolves the problem above-stated. To this end, there is provided a vehicle system of a vehicle according to claim 1.

As we will see in further details, the use of the primary deep learning model on the vehicle system's side and of the secondary deep learning model on the server's side allows a confirmation of the accuracy of an event, and therefore the broadcasting of a DENM message for said event without the interaction of the driver. Furthermore, only one type of sensor is needed, which is a camera sensor, along with the primary deep learning model, for detecting an event.

The vehicle system of a vehicle in accordance with the invention further comprises the following characteristic: said electronic control unit is configured to update said primary deep learning model with said updated instance.

In a non-limitative embodiment, said telematic control unit is further configured to:
- broadcast a periodic cooperative awareness message based on said images for stating the road conditions where said vehicle is,
- receive a secondary validation information of said road conditions from said server, said secondary validation information being generated by said secondary deep learning model,
- if said road conditions are validated, receive an updated instance of said primary deep learning model from said server and transmit it to said electronic control unit for update.

In a non-limitative embodiment, if the predictability level of said event is between a threshold below the defined level, the electronic control unit is further configured to transmit a control signal to a human interface machine of said vehicle in order to have a confirmation of the predictability level of said event.

According to the invention, said data details of said event comprise a label of said event, a location of said event, a timestamp of said event, and the predictability level of said event.

In a non-limitative embodiment, said event is an accident, a road-block, an animal, a pedestrian, an obstacle, or an ambulance vehicle.

In a non-limitative embodiment, said primary deep learning model is associated to a geographical location.

In a non-limitative embodiment, said vehicle system comprises a plurality of primary deep learning models associated to different geographical locations.

In a non-limitative embodiment, said at least one camera sensor is a front camera.

In a non-limitative embodiment, said primary deep learning model and said secondary deep learning model are convolutional neural network based.

In a non-limitative embodiment, said vehicle is an autonomous vehicle.

In a non-limitative embodiment, if said electronic control unit fails to detect an event, said telematic control unit is further configured to send the images captured by said at least one camera sensor to said server.

Said server comprises a secondary deep learning model and an instance of a primary deep learning model of a vehicle system of a vehicle, and is configured to:
- receive from said vehicle system at least one image and data details of an event which has been detected by an electronic control unit using said primary deep learning model based on images captured by at least one camera sensor of said vehicle system,
- validate/invalidate said event using said secondary deep learning model, and transmit a primary validation information to a telematic control unit of said vehicle system, said primary validation information being generated by said secondary deep learning model,
- update said instance of said primary deep learning model according to said event, if it is validated,
- transmit said updated instance to said telematic control unit for updating said primary deep learning model within said vehicle system.

Said server is further configured to:
- receive from said telematic control unit a periodic cooperative awareness message based on the images captured by said at least one camera sensor of said vehicle system for stating the road conditions where said vehicle is,
- validate/invalidate said road conditions using said secondary deep learning model, and transmit a secondary validation information to a telematic control unit of said vehicle system, said secondary validation information being generated by said secondary deep learning model,
- update said instance of said primary deep learning model according to said road conditions, if they are validated,
- transmit said updated instance to said telematic control unit for updating said primary deep learning model within said vehicle system.

In a non-limitative embodiment, said server belongs to a cloud.

In a non-limitative embodiment, if said electronic control unit fails to detect an event, said server is further configured to:
- to receive from the telematic control unit images captured by said at least one camera sensor,
- detect an event using said secondary deep learning model based on said images,
- apply a predictability level on said event, said predictability level being generated by said secondary deep learning model,
- transmit said event to the telematic control unit if its predictability level is above a defined level.

The invention also related to a method according to claim 12.

### BRIEF DESCRIPTION OF THE FIGURES

Some embodiments of methods and/or apparatus in accordance with embodiments of the present invention are now described, by way of example only, and with reference to the accompanying drawings, in which:
- Figure 1 is a schematic diagram of a vehicle system comprising a primary deep learning model, at least one camera sensor, an electronic control unit, and a telematic control unit,
- Figure 2 is a schematic diagram of a server comprising an instance of the primary deep learning model of the vehicle system of figure 1, a secondary deep learning model,
- Figure 3 depicts the cooperation between the vehicle system of figure 1 and the server of figure 2,
- Figure 4 depicts different stages performed by the vehicle system of figure 1 and the server of figure 2,
- Figure 5 is a schematic diagram of a first computer-implemented method which is carried out by the vehicle system of figure 1,
- Figure 6 is a schematic diagram of a second computer-implemented method which is carried out by the server of figure 2,
- Figure 7 is a schematic diagram of a secondary deep learning model which is convolutional neural network based, and which is used by the server of figure 2.

### DESCRIPTION OF EMBODIMENTS OF THE INVENTION

In the following description, well-known functions or constructions by the man skilled in the art, are not described in detail since they would obscure the invention in unnecessary detail.

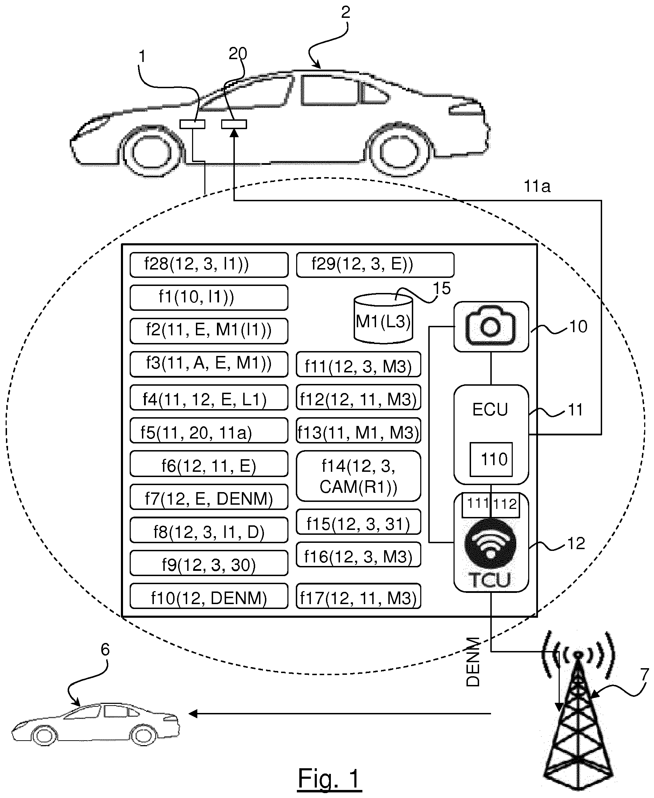

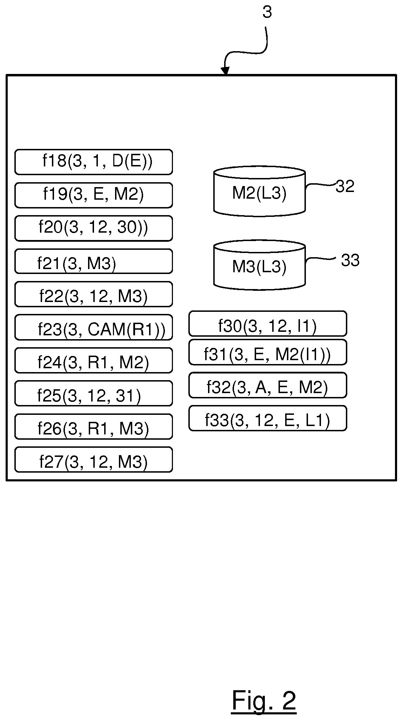

The present invention relates to a vehicle system 1 of a vehicle 2 illustrated in figures 1, 3 and 4, according to non-limitative embodiments. It also relates to a server 3 illustrated in figures 2, 3 and 4 which is configured to cooperate with said vehicle system 1. In a non-limitative embodiment, said vehicle 2 is an automobile vehicle. In non-limitative variants of embodiment, said automobile vehicle is a motor vehicle, or an electrical vehicle or a hybrid vehicle. In non-limitative examples, said vehicle 2 is a car, a truck, a motorcycle, a bus, etc. The vehicle 2 is an autonomous vehicle. When the vehicle 2 is in an autonomous mode, some or all the driving aspects of vehicle functions are handled by the vehicle system 1.

The vehicle system 1 is first described hereinafter in reference to figures 1, 3 and 4. The vehicle system 1 is configured to detect an event E and to broadcast said event E using a decentralized environmental notification message DENM. An event E is an external event which appears outside the vehicle 2. In non-limitative embodiments, an event E is an accident, a road-block, an animal, a pedestrian, an obstacle, or an ambulance vehicle.

The vehicle system 1 comprises a primary deep learning model M1. In a non-limitative embodiment, said primary deep learning model M1 is stored in a memory 15 of said vehicle system 1. In non-limitative examples the memory 15 is a FLASH or an EEPROM.

As will be described in the following, the vehicle system 1 is configured to exchange data with the server 3 to check the validity and accuracy of captured and triggered events E.

Said vehicle system 1 comprises:
- at least one camera sensor 10,
- an electronic control unit 11, also referenced ECU in the figure.
- a telematic control unit 12, also referenced TCU in the figure.

The camera sensor 10 is connected to the electronic control unit 11 and to the telematic control unit 12. In a non-limitative embodiment, the connection is performed via wire (USB, PCI etc.) or is wireless (via WIFI in a non-limitative example). In a non-limitative embodiment, the camera sensor 10 is a front camera. The camera sensor 10 is configured to capture images I1 of an environment of the vehicle 2 (function illustrated f1 (10, 11)). The environment, is an external environment, i.e. which is outside the interior of the vehicle 2. Hence, the camera sensor 10 captures the live images of the environment as the vehicle 2 is moving or not. In a non-limitative embodiment, the vehicle system 1 comprises a plurality of camera sensors 10. In a non-limitative example, it comprises a front camera 10 and two side-cameras 10.

The electronic control unit 11 is configured to:
- detect an event E using said primary deep learning model M1 based on said images I1 (function illustrated f2(11, E, M1 (11)),
- apply a predictability level A on said event E, said predictability level A being generated by said primary deep learning model M1 (function illustrated f3(11, A, E, M1),
- transmit said event E to the telematic control unit 12 if its predictability level A is above a defined level L1 (function illustrated f4(11, 12, E, L1).

In a non-limitative embodiment, the electronic control unit 11 comprises an image processing unit 110 to perform the above-mentioned functions, in particular the detection of external events E using the primary deep learning model M1.

Hence, as the electronic control unit 11 detects external events E, it can detects abnormal events E which occur, such as in a non-limitative examples accidents, road-block, animals on the road or on the pavement, pedestrians on the road or on the pavement, obstacles on the road or on the pavement, ambulance vehicles on the road etc.. Hence, when an image I1 is detected by the image processing unit 110, it is being detected to be a certain event E. the output of the image detection will be the predictability level A. So, thanks to the primary deep learning model M1, the image processing unit 110 is responsible for categorizing the different events E.

In non-limitative embodiments, the transmission of the event E to the telematic control unit 12 is performed through Ethernet or a CAN bus. The transmitted event E comprises the corresponding image I1 and some data details D described later in the description.

In a non-limitative embodiment, the primary deep learning model M1 is a convolutional neural network based, also referred as CNN. In a non-limitative variant of embodiment, the CNN of the primary deep learning model M1 is an AlexNet Architecture based. This architecture can be used efficiently in embedded devices such as the electronic control unit 11. It is a light deep learning model compared to the secondary deep learning model M2 used within the server 3 described later in the following.

The convolutional neural network is initially trained on a training data-set which are images I0 (not illustrated) of determined events E, also called initial CNN. Later, the CNN is able to predict if a given image I1 of an event E is this determined event E or that determined event E. In a non-limitative embodiment, the CNN of the primary deep learning model M1 is trained about a hundred of images l0, whereas the CNN of the secondary deep learning model M2 is trained on about ten thousands images l0.

When using the CNN in real time, the inputs of said primary deep learning model M1 are segments of pixels of the images I1 which are captured by the camera sensor 10. An image I1 is divided in segments of pixels. The outputs are the predictability level A of the events E. The CNN is structured to have an input layer, at least one hidden layer and a last layer called output layer. The input layer, hidden layer and output layer have a plurality of nodes. The input layer has nodes which simply serve to introduce the values of the input variables. Here, the values of the input variables, are the values of the segments of pixels of an image I1. The hidden and output layers nodes are connected to some of the nodes in the preceding layer or to all the nodes in the preceding layers. Each hidden node serves to weigh a segment of pixels of the image I1. It gives a probability value for the segment of pixels of said image 11. The output nodes, each contains the predictability level of an image I1, therefore the model predictability of the event E associated to said image I1. When the CNN is run, the input variable values are placed in the input nodes, and then the hidden and output layer units are progressively processed. When the entire CNN has been executed, the outputs of the output layer act as the output of the entire CNN. Here, the output is a plurality of predictability levels A of the event E. The predictability levels A are calculated by the output layer. A predictability level A is calculated depending on the training data-set during a training phase. A predictability level A being well-known by the man skilled in the art, it is not further detailed here.

In a non-limitative embodiment, the primary deep learning model M1 is associated to a geographical location L3. Hence, in the vehicle 2, there is only a primary deep learning model M1 distributed in said vehicle 2, which is based on images focused on said geographical location L3. It permits to obtain a better accuracy of the primary deep learning model M1 and to use less memory in the vehicle 2. In a non-limitative embodiment, when the vehicle 2 is halfway between a first geographical location to a second geographical location, there will be a download of a primary deep learning model M1 of the second geographical location. It is to be noted that the current geographical location of the vehicle 2 may be known via a location positioning system within said vehicle 2, illustrated 112 in figure 1. In a non-limitative embodiment, the location positioning system 112 is contained in the telematic control unit 12. Based on the vehicle's geographical location, the telematic control unit 12 will detect the change of geographical location requesting a new primary deep learning model M1 for said geographical location. The instance M3 corresponding to the primary deep learning model M1 of the vehicle 2 will be downloaded from the server 3. It is to be noted that in this case, in the server 3, there will be different instances M3 of primary deep learning models M1 associated to different geographical locations.

In a non-limitative embodiment, the vehicle system 1 comprises a plurality of primary deep learning models M1 associated to different geographical locations L3. In a non-limitative example, if the vehicle 2 goes from Paris to Berlin, there will be two primary deep learning models M1 distributed within said vehicle 2; one based on images focused on Paris, and one based on images focused on Berlin. Furthermore, when a geographical location L3 is associated to the primary deep learning model M1, on the server 3 side, it avoids training too many data of a very large bunch of data.

In a non-limitative embodiment, the defined level L1 is about 70%. Hence, if the predictability level A is above 70%, the event E is transmitted to the telematic control unit 12. As there are a plurality of predictability levels A at the output of the primary deep learning model M1, the predictability level A which has the biggest value is chosen.

In a non-limitative embodiment, if the predictability level A of said event E is between a threshold Th1 below the defined level L1, the electronic control unit 11 is further configured to transmit a control signal 11a (illustrated in figure 1) to a human interface machine 20, also referenced HMI, of said vehicle 2 in order to have a confirmation of the predictability level A of said event E (function f5(11, 20, 11a)). In a non-limitative embodiment, the threshold Th1 is equal to 20% to 69%. Hence, the event E can be validated/invalidated by the user such as the driver of the vehicle 2. The vehicle system 1 asks the driver to check the event E. In non-limitative embodiments, the human interface machine 20 is a LCD touch display, a dash-board etc. This non-limitative embodiment is a fall-back position in case the validation/invalidation of the event E using the primary deep learning model M1 of the vehicle system 1 doesn't work. It is to be noted that when the event E is confirmed by the user of the vehicle 2, in a non-limitative embodiment, the predictability level A is set to 100%.

The telematic control unit 12 is responsible for data exchange with the server 3 and for the event broadcast. In a non-limitative embodiment, the data are exchanged through a wireless communication protocol, such as in non-limitative examples, 3G/4G/5G communications or any cellular network. To this end, the telematic control unit 12 comprises a GSM module 111 for the 3G/4G/5G communications. The telematic control unit 12 is also responsible to broadcast the event E over V2X communication to other vehicles and infrastructures using a DENM protocol. The broadcasting of a DENM message is also performed though a wireless communication protocol. In a non-limitative embodiment, the wireless communication protocol is a 5G communication or a WIFI communication.

Hence, the telematic control unit 12 is configured to:
- receive said event E from said electronic control unit 11 (function f6(12, 11, E)), and broadcast a related decentralized environmental notification message DENM via a vehicle to vehicle communication V2V and/or a vehicle to infrastructure communication V2I (function f7(12, E, DENM)),
- transmit at least one image I1 and data details D of said event E to said server 3 (function f8(12, 3, I1, D),
- receive a primary validation information 30 of said event E from said server 3, said primary validation information 30 being generated by a secondary deep learning model M2 (function f9(12, 3, 30)), and cancel the broadcasting of said decentralized environmental notification message DENM if said event E is not validated (function f10(12, DENM)),
- if said event E is validated, receive an updated instance M3 of said primary deep learning model M1 from said server 3 (function f11 (12, 3, M3) and transmit it to said electronic control unit 11 (function f12(12, 11, M3) for update.

Hence, the electronic control unit 11, upon receiving the updated instance M3, is configured to update the primary deep learning model M1 with the updated instance M3 (function f13(11, M1, M3)), that is to say to replace it with the updated instance M3.

The other vehicles 6 and infrastructures 7 (such as in a non-limitative example some base stations) which are in the environment of the vehicle 2 will be able to receive the decentralized environmental notification message DENM.

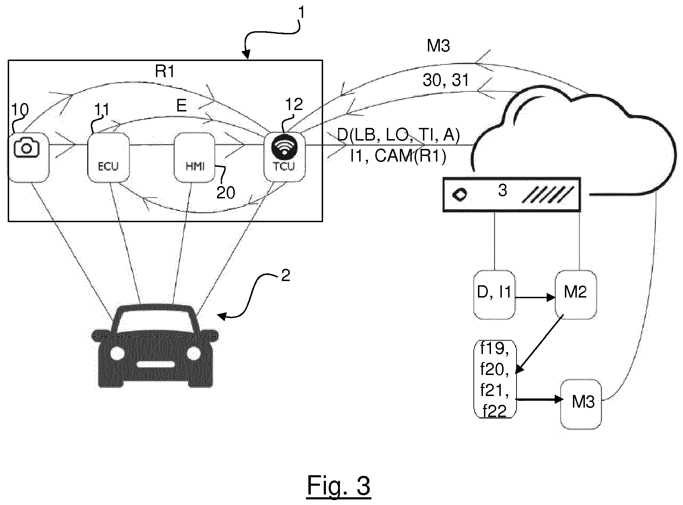

Therefore, they will be also aware of the event E when it occurs, and they will take it into account for the autonomous driving functions, unless it is cancelled. It is to be noted that the broadcasting of the event E comprises data details D of said event E. The data details D of said event E permit the server 3 to find said event E in its secondary deep learning model M2. According to the invention, as illustrated in figure 3, said data details D of said event E comprise a label LB of said event E, a location LO of said event E, a timestamp TI of said event E, and the predictability level A of said event E which has been applied by the electronic control unit 11. In a non-limitative example, the image I1 is part or the full image I1 captured by the camera sensor 10. In a non-limitative example, if there is an accident on the road, the telematic control unit 11 will send an image I1 of the event E labeled as "accident", said label LB, the corresponding location LO of the event E which has occurred, and the timestamp TI of the accident. It is to be noted that the timestamp Tl and the location LO of said event E are detected by the telematic control unit 12 as it comprises a location positioning system 112.

If said event E is recognized by the server 3, the telematic control unit 12 receives a primary validation information 30 of said event E from said server 3 which indicates that the event E is true. If the event E is not recognized by the server 3, the primary validation information 30 indicates that the event E is false. If the event E is false, the telematic control unit 11 will cancel the broadcasting of the DENM message relative to said event E. When the other vehicles 6 and the infrastructures 7 don't receive anymore said DENM message, there is no necessity any more for them to take into account said event E for the autonomous functions in particular. They will discard said event E. In a non-limitative embodiment, the primary validation information 30 is a Boolean which refers to true or false.

In a non-limitative embodiment, said telematic control unit 12 is further configured to:
- broadcast a periodic cooperative awareness message CAM based on said images I1 for stating the road conditions R1 where said vehicle 2 is (function f14(12, 3, CAM(R1)),
- receive a secondary validation information 31 of said road conditions R1 from said server 3, said secondary validation information 31 being generated by said secondary deep learning model M2 (function f15(12, 3, 31)),
- if said road conditions R1 are validated, receive an updated instance M3 of said primary deep learning model M1 from said server 3 (function f16(12, 3, M3) and transmit it to said electronic control unit 11 (function f17(12, 11, M3) for update.

Hence, the electronic control unit 11, upon receiving said updated instance M3, is configured to update the primary deep learning model M1 with the updated instance M3 (function f13(11, M1, M3)). It will help to detect if the road requires maintenance.

The broadcasting of the CAM message is performed though a wireless communication protocol. In a non-limitative embodiment, the wireless communication protocol is a 3G/4G/5G communication or a WIFI communication.

The cooperative awareness message CAM comprises the road conditions R1 i.e. the current conditions of the road where the vehicle 2 is, and a vehicle status which comprises the vehicle location LO, the timestamp Tl. In this non-limitative embodiment, the camera sensor 10 is directly connected to the telematic control unit 12 and therefore can send the captured images I1 of the environment of the vehicle 2 directly to the telematic control unit 12. This non-limitative embodiment is useful when the electronic control unit 11 has failed and can't detect any event E based on the images I1 captured by the camera sensor 10 or when there is no event E detected by the electronic control unit 11. In a non-limitative example, the road conditions R1 can comprise some fences on the road which are broken or a broken road. In a non-limitative embodiment, the secondary validation information 31 is a Boolean which refers to true or false.

If the electronic control unit 11 fails to detect an event E, in a non-limitative embodiment, the telematic control unit 12 is further configured to send the images I1 captured by the camera sensor 10 to the server 3 (function f28(12, 3, 11). In a non-limitative embodiment, detection failure can be reported by the electronic control unit 11 over the vehicle's CAN bus or Ethernet. A detection failure may happen when there are some malfunctions in the electronic control unit 11. In non-limitative examples, some malfunctions may be a short circuit in the electronic control unit 11 or a software corruption of the electronic control unit 11. In another non-limitative embodiment, there is a detection failure if the electronic control unit 11 fails to respond to the communication done by the telematic control unit 12. In this case, the telematic control unit 12 may send a message to check if the electronic control unit 11 is still operational. Upon receiving said images I1, the server 3 will act as the electronic control unit 11 and will send back an event E. The telematic control unit 12 will then received said event E. Hence, the telematic control unit 12 is further configured to receive said event E from said server 3 (function f29(12, 3, E)), and broadcast a related decentralized environmental notification message DENM via a vehicle to vehicle communication V2V and/or a vehicle to infrastructure communication V2I (function f7(12, E, DENM)). Hence, in this case, the telematic control unit 12 will not execute the functions f6 to f12 described above.

Figure 3 illustrates the cooperation between the vehicle system 1 and the server 3, in particular between the telematic control unit 12 and the server 3.The telematic control unit 12 acts as a gateway between the electronic control unit 11 and the server 3. As illustrated in figure 3, the vehicle system 1 sends to the server 3 data details D and images I1 of the events E and/or of the road conditions R1 it has detected, and the server 3 after validating said events E and/or road conditions R1 using its secondary deep learning model M2 (function f19 and f20 described later), update the instance M3 of the primary deep learning model M1 (function f21 described later) and sends it to the vehicle system 1 (function f22 described later) so that this latest can update its primary deep learning model M1 with said updated instance M3. The server 3 also sends back to the vehicle system 1 the primary validation information 30, and the secondary validation information 31, respectively on the events E and on the road conditions R1.

The server 3 is now described hereinafter in reference to figures 2, 3 and 4. The server 3 is a distant server. In a non-limitative embodiment, it belongs to a cloud. It is also called cloud server.

As illustrated in figure 2, the server 3 comprises a secondary deep learning model M2. Said secondary deep learning model M2 is more efficient than the primary deep learning model M1 because the server 3 has a greater computing power for deep learning model than the vehicle system 1. In a non-limitative embodiment, the secondary deep learning model M2 is a convolutional neural network based, also referred as CNN. In a non-limitative variant of embodiment, the CNN of the secondary deep learning model M2 is a GoogleNet Architecture based. It requires huge processing power and a large data-set of trained data.

The server 3 will gathered information, which are the images I1 containing the event E and the data details D, to validate the event E using its secondary deep learning model M2 which is based on an initial CNN. It also saves the information to retrain the instance M3. These images I1 are the training data-set. In a non-limitative embodiment, the secondary deep learning model M2 is stored in a memory 32 of the server 3 such as in a non-limitative example hard drives.

Furthermore, the server 3 comprises an instance M3 of the primary deep learning model M1 of a vehicle system 1. In a non-limitative embodiment, the instance M3 of the primary deep learning model M1 is stored in a memory 33 of the server 3 such as in non-limitative examples hard drives. The memory 32 and the memory 33 may be the same memory. In a non-limitative embodiment, a primary deep learning model M1 has a version associated. So each instance M3 of a primary deep learning model M1 has the same version. It permits the server 3 to know which instance M3 it has to transmit to the telematic control unit 12 of the vehicle 2 after the update of the instance M3.

In a non-limitative embodiment, the instance M3 is associated to a geographical location L3 when the primary deep learning model M1 is associated to a geographical location L3. It is to be noted that in this case, the server 3 knows which instance M3 to transmit after the update as it has previously received the location LO of the event E from the telematic control unit 12.

As described, the server 3 will gather information; here the images I1 and data details D, to validate the event E using its secondary deep learning model M2. It will also save this information to retrain the existing instance M3 of the primary deep learning model M1 on the server 3.

It is to be noted that initially, the instance M3 and the primary deep learning model M1 are the same. When the event E is validated through the secondary deep learning model M2, the associated images I1 and data details D are saved. Then the instance M3 gets trained with these images I1 and data details D. Hence, this trained instance M3 is called updated instance M3. It will be different (better accuracy) than the primary deep learning model M1 on the vehicle 2, which will be then replaced by said updated instance M3. The updated instance M3 will be more accurate than the initial primary deep learning model M1 which has been stored in the vehicle 2, relative to the external environment of the vehicle 2.

It is to be noted that the secondary deep learning model M2 is the more powerful deep learning model. The primary deep learning model M1 and the instance M3 are lighter deep learning model which can be easily used in vehicles.

It is to be reminded that the data details D comprise in particular the predictability level A:
- which has been applied to the event E by the electronic control unit 11 of the vehicle system 1, or
- which has been applied to the event E by the user of the vehicle 2.

The server 3 will receive both cases and revalidate said predictability level A over the secondary deep learning model M2 and will save the data details D of the event E or not depending on the predictability level A it has revalidated. Hence, in a non-limitative example, if the event E is an accident, the server 3 will save the image I1 and the data details D of the accident depending on the predictability level A it has checked.

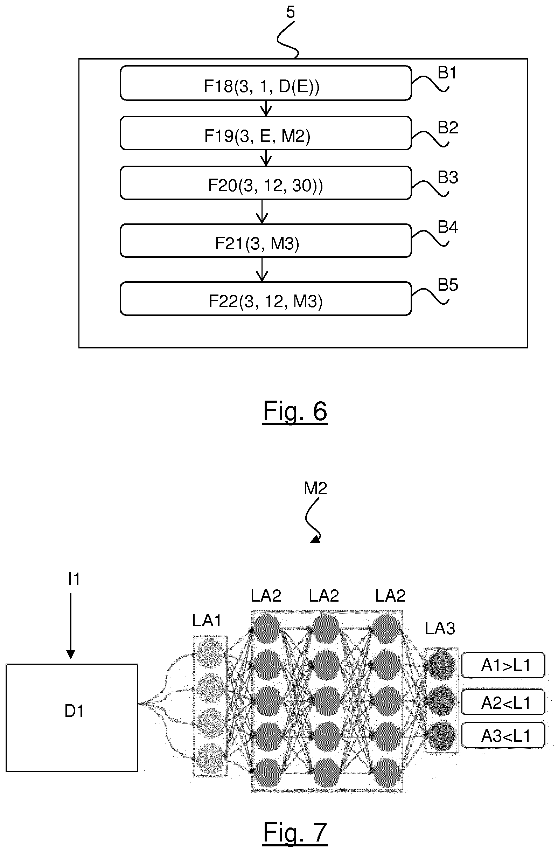

Figure 7 is a schematic illustration of a secondary deep learning model M2 which is CNN based, and which have a training data-set D1 as an input, which are segments of an image I1 of an event E, which is an accident. Said training data-set D1 is placed as an input to the input layer LA1. There are three hidden layers LA2 and an output layer LA3. It is to be noted that only three hidden layers LA2 are illustrated, but there are more hidden layers LA2. The output layer LA3 has three outputs for illustration, which are three predictability levels A1, A2, A3 respectively associated to an image of an accident, an image of a fence broken and an image of an ambulance. The predictability level A1 is above the defined level L1, and the predictability levels A2 and A3 are below the defined level L1. The predictability level A1 is selected for the event E.

In a non-limitative embodiment, the update of the instance M3 is performed when the server 3 collects a good amount of data details D of a plurality of events E. It then will start training a new deep learning model, i.e. the instance M3. The updated instance M3 is hence a retrained model of the corresponding primary deep learning model M1 in the vehicle 2. This new deep learning model can be sent to the telematic control unit 12 for updating the primary deep learning model M1. This will enhance the vehicle's ability and accuracy for events' detection. The instance M3 can be also updated only to certain geographical location L3 so that the corresponding primary deep learning model M1 could be more specific to where the vehicle's location is. The instance M3 will, after gathering many images I1 with data details D about real life events E, be a retrained deep learning model which will become more enhanced than the primary deep learning model M1, and therefore more accurate.

It is to be noted that information gathered by the vehicle 2 might vary from one geographical location to another. When the server 3 analyses the information in each separate geographical location, it will result in a smaller size of the updated instance M3 and therefore of the corresponding primary deep learning model M1. For example, if the vehicle 2 is located in France, the images I1 captured will be relevant to the areas in France's geographical location only, which will have a positive impact on accuracy and efficiency in its own location. Since the server 3 will have information about the captured images I1 of the event E, it will be able to categorize and retrain the deep learning model based on the vehicle's geographical location.

Instead of having many single updated (retrained) instances M3 for all vehicles, we will have many retrained instances M3 for different geographical locations. So the updated instance M3 will be downloaded to the vehicle 2 according to its geographical location. If this geographical location changes the server 3 will download a new updated instance M3 to the vehicle 2 trained on its reallocated location.

In another non-limitative embodiment, the update of the instance M3 is performed each time there is a new event E which is validated by the server 3.

Hence, as illustrated in figure 2, the server 3 is configured to:
- receive from said vehicle system 1 at least one image I1 and data details D of an event E which has been detected by an electronic control unit 11 using said primary deep learning model M1 based on images I1 captured by at least one camera sensor 10 of said vehicle system 1 (function illustrated f18(3, 1, D(E))),
- validate/invalidate said event E based on said secondary deep learning model M2 (function illustrated f19(3, E, M2)), and transmit a primary validation information 30 to the telematic control unit 12 of said vehicle system 1, said primary validation information 30 being generated by said secondary deep learning model M2 (function illustrated f20(3, 12, 30)),
- update said instance M3 of the primary deep learning model M1 according to said event E, if it is validated (function illustrated f21(3, M3)),
- transmit said updated instance M3 to said telematic control unit 12 for updating said primary deep learning model M1 within said vehicle system 1 (function illustrated f22(3, 12, M3)).

In a non-limitative embodiment, when the server 3 invalidates the event E, it will discard it from the instance M3 of the primary deep learning model M1, and consequently update the instance M3.

As mentioned, the instance M3 of the vehicle's deep learning model on the server 3 will be updated with images I1 and data D captured in real life. Then the instance M3 will be retrained on these images I1 and data D. Then when the training is completed, the existing primary deep learning model M1 in the vehicle 2 is removed and replaced with a newer one, i.e. the retrained instance M3.

In a non-limitative embodiment, the transmission of the updated instance M3 is performed over the air through a wireless protocol communication. In a non-limitative variant of embodiment, the update can be performed using automotive WIFI with connection infrastructure or can be performed using automotive WIFI with other vehicle that already has the updated instance M3. In another non-limitative variant of embodiment, the update can be performed using a cellular network such as 3G/4G/5G communications in non-limitative examples. In another non limitative embodiment, the update can be performed through flashing over the air, using a cellular network with internet connectivity. The advantage of the flashing over the air is to avoid going to a service center to update a vehicle's deep learning model. The updated instance M3 is just downloaded over the internet.

Hence, the primary deep learning model M1 in the vehicle system 1 will be more accurate after its update. Hence, the server 3 permits to enhance the primary deep learning model M1 of the vehicle system 1. The server 3 is further configured to:
- receive from said telematic control unit 12 a periodic cooperative awareness message CAM based on the images I1 captured by said at least one camera sensor 10 of said vehicle system 1 for stating the road conditions R1 where said vehicle 2 is (function illustrated f23(3, CAM(R1))),
- validate/invalidate said road conditions R1 based on said secondary deep learning model M2 (function illustrated f24(3, R1, M2)), and transmit a secondary validation information 31 to the telematic control unit 12 of said vehicle system 1, said secondary validation information 31 being generated by said secondary deep learning model M2 (function illustrated f25(3, 12, 31)),
- update said instance M3 of said primary deep learning model M1 according to said road conditions R1, if they are validated (function illustrated f26(3, R1, M3)),
- transmit said updated instance M3 to said telematic control unit 12 for updating said primary deep learning model M1 within said vehicle system 1 (function illustrated f27(3, 12, M3)).

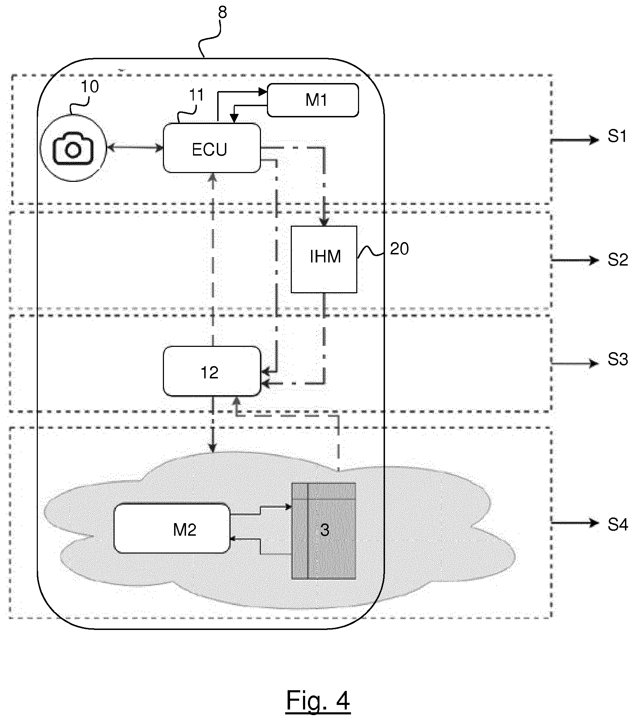

Hence, the vehicle system 1 and the server 3 permit to detect and event E and confirm said event E. Figure 4 summarizes the different stages of the whole system 8 for confirming an event E which occurs in the environment of the vehicle 2, which includes the vehicle system 1 and the server 3. As illustrated in figure 4, there is an event processing stage S1 performed by the camera sensor 10 and by the electronic control unit 11, an event verification stage S2 performed by the driver of the vehicle 2, an event broadcasting stage S3 performed by the telematic control unit 12, and an over cloud stage S4 performed by the server 3. The event verification stage S2 is not mandatory as described before. The mixed dotted and dashed path resembles the communication of event detection and transmission to the server 3. The dashed line resembles the communication done by the server 3 to verify the event E or the update by the electronic control unit 11.

It is to be noted that the server 3 will receive images I1 and data details D of different events E detected by different vehicle systems 1 of different vehicles. Therefore, the server 3 will be able to gather much information from different vehicles which will enhance the training of the secondary deep learning model M2 and of the instance M3, and therefore the update of the primary deep learning model M1. Hence, the execution of the autonomous functions of the vehicle 2 and the other vehicle which vehicle system 1 cooperates with the server 3 will be more efficient, as the autonomous functions take into account the event E which occurs in the environment of the concerned vehicle.

If the electronic control unit 11 has failed to detect an event E, in a non-limitative embodiment, the server 3 is further configured to receive from the telematic control unit 12 images I1 captured by the camera sensor 10 (function f30(3, 12, 11). Upon receiving the images I1, the server 3 will act as the electronic control unit 11 of the vehicle system 1 for the event detection. The secondary deep learning model M2 will be used to detect an event E instead of the primary deep learning model M1 that is usually used. Hence, if the If the electronic control unit 11 fails to detect an event E, the server 3 is further configured to:
- detect an event E using said secondary deep learning model M2 based on said images I1 (function illustrated f31 (3, E, M2(I1)),
- apply a predictability level A on said event E, said predictability level A being generated by said secondary deep learning model M2 (function illustrated f32(3, A, E, M2),
- transmit said event E to the telematic control unit 12 if its predictability level A is above a defined level L1 (function illustrated f33(3, 12, E, L1).

In this case, the server 3 will not execute the functions f18 to f22 described before.

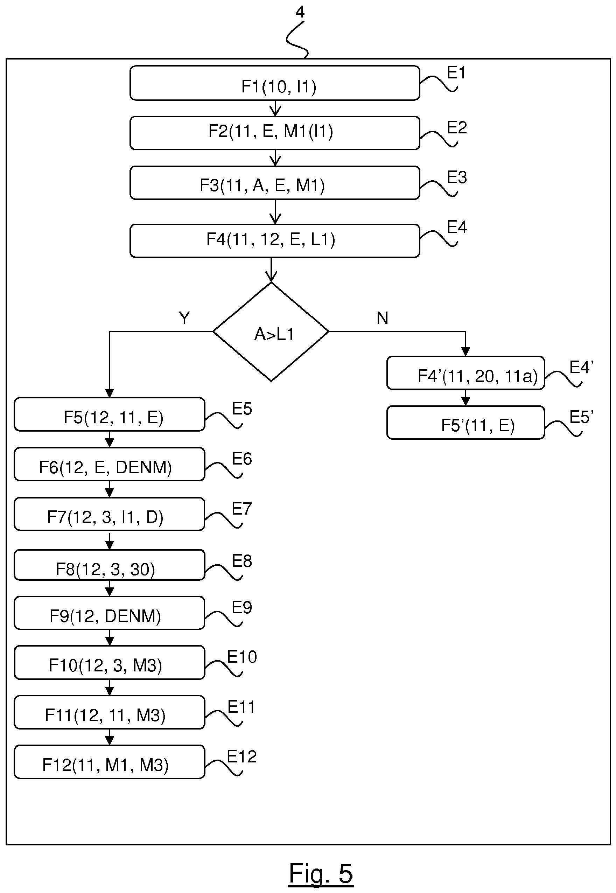

The vehicle system 1 of the vehicle 2 is configured to carry out a first method 4. It is a computer-implemented method. The first method 4 is illustrated in figure 5. It comprises the following steps in a non-limitative embodiment.

In step E1), illustrated F1 (10, 11), images I1 of the environment of said vehicle 2 are captured by the at least one camera sensor 10 of the vehicle system 1 of said vehicle 2.

In step E2), illustrated F2(11, E, M1(I1)), an event E is detected by the electronic control unit 11 of said vehicle system 1 using a primary deep learning model M1 based on said images I1.

In step E3), illustrated F3(11, A, E, M1), said electronic control unit 11 applies predictability level A on said event E, said predictability level A being generated by said primary deep learning model M1.

In step E4), illustrated F4(11, 12, E, L1), said electronic control unit 11 transmits said event E to the telematic control unit 12 of said vehicle system 1 if its predictability level A is above a defined level L1. If the predictability level A is above the defined level, the step E5 is performed (branch Y). If not (branch N), in step E4', function illustrated F4'(11, 20, 11a), the electronic control unit 11 transmits a control signal 11a to a human interface machine 20 of said vehicle 2 in order to have the confirmation of the predictability level A of said event E. If the user confirms that the event E is true, the step E5 is performed. Otherwise, if the user confirms that the event E is false, the electronic control unit 11 declines the event E in step E5', function illustrated F5'(11, E).

In step E5), function illustrated F5(12, 11, E), the telematic control unit 12 receives said event E from said electronic control unit 11.

In step E6), function illustrated F6(12, E, DENM), the telematic control unit 12 broadcasts a decentralized environmental notification message DENM related to said event E via a vehicle to vehicle communication V2V and/or a vehicle to infrastructure communication V2I.

In step E7), function illustrated F7(12, 3, I1, D), the telematic control unit 12 transmits at least one image I1 and data details D of said event E to the server 3.

In step E8), function illustrated F8(12, 3, 30), the telematic control unit 12 receives a primary validation information 30 from said server 3, said primary validation information 30 being generated by said secondary deep learning model M2, and in step E9), function illustrated F9(12, DENM), the telematic control unit 12 cancels said broadcasting if said event E is not validated.

In step E10), function illustrated F10(12, 3, M3), if said event E is validated, the telematic control unit 12 receives an updated instance M3 of said primary deep learning model M1 from said server 3 and in step E11), function illustrated F11 (12, 11, M3), the telematic control unit 12 transmits said update M3 to the electronic control unit 11 of said vehicle system 1 for updating said primary deep learning model M1.

Finally, in step E12), function illustrated F12(11, M3, M1), the electronic control unit 11 updates the primary deep learning model M1 with the updated instance M3.

It is to be noted that the same steps E6 to E12 applied by replacing the event E by the road conditions R1 and by replacing the DENM message by the CAM message, when the telematic control unit 12 sends a periodic cooperative awareness message CAM for stating the road conditions R1. It is to be noted that this non-limitative embodiment is useful to maintain the stability of the vehicle system 1 in case of any failure condition occurs in the detection of an event E by the electronic control unit 11.

The server 3 is configured to carry out a second method 5. It is a computer-implemented method. The second method 5 is illustrated in figure 6. It comprises the following steps .

In step B1), illustrated F18(3, 1, D(E)), the server 3 receives from said vehicle system 1 at least one image I1 and data details D of an event E which has been detected by an electronic control unit 11 using said primary deep learning model M1 based on images I1 captured by at least one camera sensor 10 of said vehicle system 1.

In step B2), illustrated F19(3, E, M2), the server 3 validates/invalidates said event E using said secondary deep learning model M2, and in step B3) illustrated F20(3, 12, 30), transmits a primary validation information 30 to the telematic control unit 12 of said vehicle system 1, said primary validation information 30 being generated by said secondary deep learning model M2.

In step B4), illustrated F21(3, M3) the server 3 updates the instance M3 of the primary deep learning model M1 according to said event E, if it is validated.

In step B5), illustrated F22(3, 12, M3), the server 3 transmits to said telematic control unit 12 said updated instance M3 for updating said primary deep learning model M1 within said vehicle system 1. The existing primary deep learning model M1 is therefore replaced with the updated instance M3, in order to be more accurate with the environment of the vehicle 2.

It is to be noted that the same steps B1 to B5 also applied by replacing the event E by the road conditions R1.

It is to be understood that the present invention is not limited to the aforementioned embodiments and variations and modifications may be made without departing from the scope of the invention, as defined by the claims.

Hence, some embodiments of the invention may comprise one or a plurality of the following advantages:
- the DENM messages are auto-triggered. Hence, the driver will not be interfering with the detection of an event E as it will be done autonomously,
- the server 3 will be updated with on road conditions, and vehicle status,
- the electronic control unit 11 of the vehicle system 1 will be updated with a more enhanced deep learning model,
- as live images of events E will be captured through many vehicles that's comprise the vehicle system 1, it will enhance the accuracy of an event E detection,
- it retrains the primary deep learning model M1 for the vehicle 2 through captured images of detected events E. It permits the update of the existing deep learning model of the vehicle with a more accurate deep learning model,
- it permits the update of the deep learning model of the server 3 with real captured images and data details of real events E, for better and further enhancements for road and geographic status,
- it permits to validate an event detection over cloud,
- using deep learning model and only one type of sensor (here a camera sensor) instead of using a complex image processing which uses different types of sensors (camera sensor, lidar sensor, sensor fusion etc.) as another solution of the prior art, permits on the long run to have a more accuracy in the event detection and therefore to enhance the event detection. Moreover, as it avoids using different types of sensors as it only needs at least one camera sensor(s), it is more simple to implement and costs less than another solution of the prior art. Therefore, there needs a less powerful electronic control unit to process the images I1 from the camera sensor 10 than one which has to manage different types of data coming from different types of sensor. The event detection is therefore less complex with the invention,
- it benefits the V2X communications as well as autonomous driving,
- it enhances and increases vehicle's autonomy and safety,
- it permits the server 3 to retrain its existing secondary deep learning model M2 with real live data captured by different vehicles which will enhance the deep learning model's accuracy.

## Claims

1. A vehicle system (1) of a vehicle (2) configured to detect an external event (E) and to broadcast said event (E) using a decentralized environmental notification message (DENM), wherein said vehicle system (1) comprises:
- at least one camera sensor (10) configured to capture images (11) of an environment of said vehicle (2),
- an electronic control unit (11) configured to :
- detect an event (E) using a primary deep learning model (M1) based on said images (11),
- determine a predictability level (A) of said event (E), said predictability level (A) being generated by said primary deep learning model (M1), (M1) for categorizing the different events (E), said events comprising accidents, road-block, animals on the road or on the pavement, pedestrians on the road or on the pavement, obstacles on the road or on the pavement and ambulance vehicles on the road,
- transmit said event (E) to a telematic control unit (12) of said vehicle system (1) if its predictability level (A) is above a defined level (L1),
- said telematic control unit (12) configured to :
- receive said event (E) from said electronic control unit (11) and broadcast a related decentralized environmental notification message (DENM) via a vehicle to vehicle communication (V2V) to other vehicles (6) in the environment of the vehicle (2) and/or via a vehicle to infrastructure communication (V2I), to infrastructures (7) in the environment of the vehicle (2),
- transmit at least one image (11) and data details (D) of said event (E) to a server (3), said data details (D) of said event (E) comprising a label (LB) of said event (E), a location (LO) of said event (E), a timestamp (TI) of said event (E), and the predictability level (A) of said event (E),
- receive a primary validation information (30) of said event (E) from said server (3), said primary validation information (30) being generated by a secondary deep learning model (M2), and cancel the broadcasting of said decentralized environmental notification message (DENM) if said event (E) is not validated,
- if said event (E) is validated, receive an updated instance (M3) of said primary deep learning model (M1) from said server (3) and transmit it to said electronic control unit (11) for updating said primary deep learning model (M1).

2. A vehicle system (1) according to claim 1, wherein said electronic control unit (11) is configured to update said primary deep learning model (M1) with said updated instance (M3).

3. A vehicle system (1) according to claim 1 or claim 2, wherein said telematic control unit (12) is further configured to:
- broadcast a periodic cooperative awareness message (CAM) based on said images (11) for stating the road conditions (R1) where said vehicle (2) is,
- receive a secondary validation information (31) of said road conditions (R1) from said server (3), said secondary validation information (31) being generated by said secondary deep learning model (M2),
- if said road conditions (R1) are validated, receive an updated instance (M3) of said primary deep learning model (M1) from said server (3) and transmit it to said electronic control unit (11) for update.

4. A vehicle system (1) according to any of the preceding claims, wherein if the predictability level (A) of said event (E) is between a threshold (Th1) below the defined level (L1), the electronic control unit (11) is further configured to transmit a control signal (11a) to a human interface machine (20) of said vehicle (2) in order to have a confirmation of the predictability level (A) of said event (E).

5. A vehicle system (1) according to any one of the preceding claims, wherein said event (E) is an accident, a road-block, an animal, a pedestrian, an obstacle, or an ambulance vehicle.

6. A vehicle system (1) according to any of the preceding claims, wherein said primary deep learning model (M1) is associated to a geographical location (L3).

7. A vehicle system (1) according to the preceding claim, wherein said vehicle system (1) comprises a plurality of primary deep learning models (M1) associated to different geographical locations (L3).

8. A vehicle system (1) according to any of the preceding claims, wherein said at least one camera sensor (10) is a front camera.

9. A vehicle system (1) according to any of the preceding claims, wherein said primary deep learning model (M1) and said secondary deep learning model (M2) are convolutional neural network (CNN) based.

10. A vehicle system (1) according to any one of the preceding claims, wherein said vehicle (2) is an autonomous vehicle.

11. A vehicle system (1) according to any one of the preceding claims, wherein if said electronic control unit (11) fails to detect an event (E), said telematic control unit (12) is further configured to send the images (11) captured by said at least one camera sensor (10) to said server (3).

12. A method (4) comprising:
- a capture (E1) by at least one camera sensor (10) of a vehicle system (1) of a vehicle (2), of images (11) of the environment of said vehicle (2),
- a detection (E2) by an electronic control unit (11) of said vehicle system (1) of an external event (E) using a primary deep learning model (M1) based on said images (11),
- a determining (E3) by said electronic control unit (11) of an predictability level (A) of said event (E), said predictability level (A) being generated by said primary deep learning model (M1) for categorizing the different events (E), said events comprising accidents, road-block, animals on the road or on the pavement, pedestrians on the road or on the pavement, obstacles on the road or on the pavement and ambulance vehicles on the road,
- a transmission (E4) by said electronic control unit (11) of said event (E) to a telematic control unit (12) of said vehicle system (1) if its predictability level (A) is above a defined level (L1),
- the reception (E5) by said telematic control unit (12) of said event (E),
- the broadcasting (E6) by said telematic control unit (12) of a decentralized environmental notification message (DENM) related to said event (E) via a vehicle to vehicle communication (V2V) to other vehicles (6) in the environment of the vehicle (2) and/or via a vehicle to infrastructure communication (V2I), to infrastructures (7) in the environment of the vehicle (2)
- the transmission (E7) by said telematic control unit (12) of at least one image (11) and of data details (D) of said event (E) to a server (3), said data details (D) of said event (E) comprising a label (LB) of said event (E), a location (LO) of said event (E), a timestamp (TI) of said event (E), and the predictability level (A) of said event (E),
- the reception (E8) by said telematic control unit (12) of a primary validation information (30) from said server (3), said primary validation information (30) being generated by a secondary deep learning model (M2), and the cancellation (E9) by said telematic control unit (12) of said broadcasting if said event (E) is not validated,
- if said event (E) is validated, the reception (E10) by said telematic control unit (12) of an updated instance (M3) of said primary deep learning model (M1) from said server (3) and the transmission (E11) of said updated instance (M3) to an electronic control unit (11) of said vehicle system (1) for updating said primary deep learning model (M1).

## Patentansprüche

1. Fahrzeugsystem (1) eines Fahrzeugs (2), das dazu ausgelegt ist, ein externes Ereignis (E) zu detektieren und das Ereignis (E) mittels Broadcasting unter Verwendung einer dezentralisierten Umgebungsbenachrichtigungsnachricht (DENM) zu übermitteln, wobei das Fahrzeugsystem (1) Folgendes umfasst:
- mindestens einen Kamerasensor (10), der dazu ausgelegt ist, Bilder (11) einer Umgebung des Fahrzeugs (2) zu erfassen,
- eine elektronische Steuereinheit (11), die zu Folgendem ausgelegt ist:
- Detektieren eines Ereignisses (E) unter Verwendung eines primären Tiefenlernmodells (M1) auf Basis der Bilder (I1),
- Bestimmen eines Vorhersagbarkeitsniveaus (A) des Ereignisses (E), wobei das Vorhersagbarkeitsniveau (A) vom primären Tiefenlernmodell (M1), (M1) zum Kategorisieren der verschiedenen Ereignisse (E) erzeugt wird, wobei die Ereignisse Unfälle, eine Straßenblockierung, Tiere auf der Straße oder auf dem Bürgersteig, Fußgänger auf der Straße oder auf dem Bürgersteig, Hindernisse auf der Straße oder auf dem Bürgersteig und Ambulanzfahrzeuge auf der Straße umfassen,
- Übertragen des Ereignisses (E) zu einer telematischen Steuereinheit (12) des Fahrzeugsystems (1), wenn sein Vorhersagbarkeitsniveau (A) über einem definierten Niveau (L1) liegt,
- wobei die telematische Steuereinheit (12) zu Folgendem ausgelegt ist:
- Empfangen des Ereignisses (E) von der elektronischen Steuereinheit (11) und Übermitteln einer zugehörigen dezentralisierten Umgebungsbenachrichtigungsnachricht (DENM) mittels Broadcasting via eine Fahrzeug-zu-Fahrzeug-Kommunikation (V2V) zu anderen Fahrzeugen (6) in der Umgebung des Fahrzeugs (2) und/oder via eine Fahrzeugzu-Infrastruktur-Kommunikation (V2I) zu Infrastrukturen (7) in der Umgebung des Fahrzeugs (2),
- Übertragen von mindestens einem Bild (I1) und von Datendetails (D) des Ereignisses (E) zu einem Server (3), wobei die Datendetails (D) des Ereignisses (E) ein Kennzeichen (LB) des Ereignisses (E), einen Standort (LO) des Ereignisses (E), einen Zeitstempel (TI) des Ereignisses (E) und das Vorhersagbarkeitsniveau (A) des Ereignisses (E) umfassen,
- Empfangen von primären Validierungsinformationen (30) des Ereignisses (E) vom Server (3), wobei die primären Validierungsinformationen (30) von einem sekundären Tiefenlernmodell (M2) erzeugt werden, und Abbrechen des Übermittelns mittels Broadcasting der dezentralisierten Umgebungsbenachrichtigungsnachricht (DENM), wenn das Ereignis (E) nicht validiert wird,
- wenn das Ereignis (E) validiert wird, Empfangen einer aktualisierten Instanz (M3) des primären Tiefenlernmodells (M1) vom Server (3) und Übertragen derselben zur elektronischen Steuereinheit (11) zum Aktualisieren des primären Tiefenlernmodells (M1).

2. Fahrzeugsystem (1) nach Anspruch 1, wobei die elektronische Steuereinheit (11) dazu ausgelegt ist, das primäre Tiefenlernmodell (M1) mit der aktualisierten Instanz (M3) zu aktualisieren.

3. Fahrzeugsystem (1) nach Anspruch 1 oder Anspruch 2, wobei die telematische Steuereinheit (12) ferner zu Folgendem ausgelegt ist:
- Übermitteln einer periodischen kooperativen Bewusstseinsnachricht (CAM) mittels Broadcasting auf Basis der Bilder (11) zum Angeben der Straßenbedingungen (R1) dort, wo sich das Fahrzeug (2) befindet,
- Empfangen von sekundären Validierungsinformationen (31) der Straßenbedingungen (R1) vom Server (3), wobei die sekundären Validierungsinformationen (31) vom sekundären Tiefenlernmodell (M2) erzeugt werden,
- wenn die Straßenbedingungen (R1) validiert werden, Empfangen einer aktualisierten Instanz (M3) des primären Tiefenlernmodells (M1) vom Server (3) und Übertragen derselben zur elektronischen Steuereinheit (11) für eine Aktualisierung.

4. Fahrzeugsystem (1) nach einem der vorhergehenden Ansprüche, wobei, wenn das Vorhersagbarkeitsniveau (A) des Ereignisses (E) innerhalb eines Schwellenbereiches (Th1) unter dem definierten Niveau (L1) liegt, die elektronische Steuereinheit (11) ferner dazu ausgelegt ist, ein Steuersignal (11a) zu einer Mensch-Maschine-Schnittstelle (20) des Fahrzeugs (2) zu übertragen, um eine Bestätigung des Vorhersagbarkeitsniveaus (A) des Ereignisses (E) zu erhalten.

5. Fahrzeugsystem (1) nach einem der vorhergehenden Ansprüche, wobei das Ereignis (E) ein Unfall, eine Straßenblockierung, ein Tier, ein Fußgänger, ein Hindernis oder ein Ambulanzfahrzeug ist.

6. Fahrzeugsystem (1) nach einem der vorhergehenden Ansprüche, wobei das primäre Tiefenlernmodell (M1) mit einem geografischen Standort (L3) verknüpft ist.

7. Fahrzeugsystem (1) nach dem der vorhergehenden Anspruch, wobei das Fahrzeugsystem (1) eine Vielzahl von primären Tiefenlernmodellen (M1) umfasst, die mit verschiedenen geografischen Standorten (L3) verknüpft sind.

8. Fahrzeugsystem (1) nach einem der vorhergehenden Ansprüche, wobei der mindestens eine Kamerasensor (10) eine vordere Kamera ist.

9. Fahrzeugsystem (1) nach einem der vorhergehenden Ansprüche, wobei das primäre Tiefenlernmodell (M1) und das sekundäre Tiefenlernmodell (M2) auf faltenden neuronalen Netzwerken (CNN) basieren.

10. Fahrzeugsystem (1) nach einem der vorhergehenden Ansprüche, wobei das Fahrzeug (2) ein autonomes Fahrzeug ist.

11. Fahrzeugsystem (1) nach einem der vorhergehenden Ansprüche, wobei, wenn die elektronische Steuereinheit (11) kein Ereignis (E) detektiert, die telematische Steuereinheit (12) ferner dazu ausgelegt ist, die Bilder (I1), die von dem mindestens einen Kamerasensor (10) erfasst werden, an den Server (3) zu senden.

12. Verfahren (4), das Folgendes umfasst:
- eine Erfassung (E1) von Bildern (I1) der Umgebung des Fahrzeugs (2) durch mindestens einen Kamerasensor (10) eines Fahrzeugsystems (1) eines Fahrzeugs (2),
- eine Detektion (E2) eines externen Ereignisses (E) durch eine elektronische Steuereinheit (11) des Fahrzeugsystems (1) unter Verwendung eines primären Tiefenlernmodells (M1) auf Basis der Bilder (11),
- ein Bestimmen (E3) eines Vorhersagbarkeitsniveaus (A) des Ereignisses (E) durch die elektronische Steuereinheit (11), wobei das Vorhersagbarkeitsniveau (A) vom primären Tiefenlernmodell (M1) zum Kategorisieren der verschiedenen Ereignisse (E) erzeugt wird, wobei die Ereignisse Unfälle, eine Straßenblockierung, Tiere auf der Straße oder auf dem Bürgersteig, Fußgänger auf der Straße oder auf dem Bürgersteig, Hindernisse auf der Straße oder auf dem Bürgersteig und Ambulanzfahrzeuge auf der Straße umfassen,
- eine Übertragung (E4) des Ereignisses (E) durch die elektronische Steuereinheit (11) zu einer telematischen Steuereinheit (12) des Fahrzeugsystems (1), wenn sein Vorhersagbarkeitsniveau (A) über einem definierten Niveau (L1) liegt,
- den Empfang (E5) des Ereignisses (E) durch die telematische Steuereinheit (12),
- das Übermitteln (E6) einer dezentralisierten Umgebungsbenachrichtigungsnachricht (DENM), die mit dem Ereignis (E) verknüpft ist, durch die telematische Steuereinheit (12) mittels Broadcasting via eine Fahrzeug-zu-Fahrzeug-Kommunikation (V2V) zu anderen Fahrzeugen (6) in der Umgebung des Fahrzeugs (2) und/oder via eine Fahrzeug-zu-Infrastruktur-Kommunikation (V2I) zu Infrastrukturen (7) in der Umgebung des Fahrzeugs (2)
- die Übertragung (E7) von mindestens einem Bild (I1) und von Datendetails (D) des Ereignisses (E) durch die telematische Steuereinheit (12) zu einem Server (3), wobei die Datendetails (D) des Ereignisses (E) ein Kennzeichen (LB) des Ereignisses (E), einen Standort (LO) des Ereignisses (E), einen Zeitstempel (TI) des Ereignisses (E) und das Vorhersagbarkeitsniveau (A) des Ereignisses (E) umfassen,
- den Empfang (E8) von primären Validierungsinformationen (30) durch die telematische Steuereinheit (12) vom Server (3), wobei die primären Validierungsinformationen (30) von einem sekundären Tiefenlernmodell (M2) erzeugt werden, und den Abbruch (E9) des Übermittelns mittels Broadcasting, durch die telematische Steuereinheit (12), wenn das Ereignis (E) nicht validiert wird,
- den Empfang (E10) einer aktualisierten Instanz (M3) des primären Tiefenlernmodells (M1) durch die telematische Steuereinheit (12) vom Server (3), wenn das Ereignis (E) validiert wird, und die Übertragung (E11) der aktualisierten Instanz (M3) zu einer elektronischen Steuereinheit (11) des Fahrzeugsystems (1) zum Aktualisieren des primären Tiefenlernmodells (M1).

## Revendications

1. Système de véhicule (1) d'un véhicule (2), configuré pour détecter un événement externe (E) et pour diffuser ledit événement (E) au moyen d'un message décentralisé de notification d'événement (DENM), ledit système de véhicule (1) comprenant :
- au moins un capteur de caméra (10), configuré pour capturer des images (I1) d'un environnement dudit véhicule (2),
- une unité de commande électronique (11), configurée pour :
- détecter un événement (E) au moyen d'un modèle d'apprentissage profond principal (M1) sur la base desdites images (I1),
- déterminer un niveau de prévisibilité (A) dudit événement (E), ledit niveau de prévisibilité (A) étant généré par ledit modèle d'apprentissage profond principal (M1), (M1) pour catégoriser les différents événements (E), lesdits événements comprenant des accidents, des barrages routiers, des animaux sur la route ou sur la chaussée, des piétons sur la route ou sur la chaussée, des obstacles sur la route ou sur la chaussée et des véhicules de sauvetage sur la route,
- transmettre ledit événement (E) à une unité de commande télématique (12) dudit système de véhicule (1) si son niveau de prévisibilité (A) est supérieur à un niveau défini (L1),
- ladite unité de commande télématique (12) étant configurée pour :
- recevoir ledit événement (E) en provenance de ladite unité de commande électronique (11) et diffuser un message décentralisé de notification d'environnement (DENM) par l'intermédiaire d'une communication de véhicule à véhicule (V2V) à d'autres véhicules (6) dans l'environnement du véhicule (2) et/ou par l'intermédiaire d'une communication de véhicule à infrastructure (V2I) à des infrastructures (7) dans l'environnement du véhicule (2),
- transmettre à un serveur (3) au moins une image (I1) et des données détaillées (D) dudit événement (E), lesdites données détaillées (D) dudit événement (E) comprenant une étiquette (LB) dudit événement (E), une localisation (LO) dudit événement (E), un horodatage (TI) dudit événement (E) et le niveau de prévisibilité (A) dudit événement (E),
- recevoir des informations de validation principales (30) dudit événement (E) en provenance dudit serveur (3), lesdites informations de validation principales (30) étant générées par un modèle d'apprentissage profond secondaire (M2), et annuler la diffusion dudit message décentralisé de notification d'environnement (DENM) si ledit événement (E) n'est pas validé,
- si ledit événement (E) est validé, recevoir une instance mise à jour (M3) dudit modèle d'apprentissage profond principal (M1) en provenance dudit serveur (3) et la transmettre à ladite unité de commande électronique (11) pour mettre à jour ledit modèle d'apprentissage profond principal (M1).

2. Système de véhicule (1) selon la revendication 1, dans lequel ladite unité de commande électronique (11) est configurée pour mettre à jour ledit modèle d'apprentissage profond principal (M1) avec ladite instance mise à jour (M3).

3. Système de véhicule (1) selon la revendication 1 ou 2, dans lequel ladite unité de commande télématique (12) est en outre configurée pour :
- diffuser un message périodique de sensibilisation coopérative (CAM) sur la base desdites images (I1) pour indiquer les conditions routières (R1) où se trouve ledit véhicule (2),
- recevoir en provenance dudit serveur (3) des informations de validation secondaires (31) desdites conditions routières (R1), lesdites informations de validation secondaires (31) étant générées par ledit modèle d'apprentissage profond secondaire (M2),
- si lesdites conditions routières (R1) sont validées, recevoir une instance mise à jour (M3) dudit modèle d'apprentissage profond principal (M1) en provenance dudit serveur (3) et la transmettre à ladite unité de commande électronique (11) en vue de sa mise à jour.

4. Système de véhicule (1) selon l'une quelconque des revendications précédentes, dans lequel, si le niveau de prévisibilité (A) dudit événement (E) est à l'intérieur d'un seuil (Th1) inférieur au niveau défini (L1), l'unité de commande électronique (11) est en outre configurée pour transmettre un signal de commande (11a) à une interface homme-machine (20) dudit véhicule (2) afin d'obtenir une confirmation du niveau de prévisibilité (A) dudit événement (E).

5. Système de véhicule (1) selon l'une quelconque des revendications précédentes, dans lequel ledit événement (E) est un accident, un barrage routier, un animal, un piéton, un obstacle ou un véhicule de sauvetage.

6. Système de véhicule (1) selon l'une quelconque des revendications précédentes, dans lequel ledit modèle d'apprentissage profond principal (M1) est associé à une localisation géographique (L3).

7. Système de véhicule (1) selon la revendication précédente, ledit système de véhicule (1) comprenant une pluralité de modèles d'apprentissage profond principaux (M1) associés à différentes localisations géographiques (L3) .

8. Système de véhicule (1) selon l'une quelconque des revendications précédentes, dans lequel ledit au moins un capteur de caméra (10) est une caméra avant.

9. Système de véhicule (1) selon l'une quelconque des revendications précédentes, dans lequel ledit modèle d'apprentissage profond principal (M1) et ledit modèle d'apprentissage profond secondaire (M2) sont basés sur un réseau neuronal convolutif (CNN).

10. Système de véhicule (1) selon l'une quelconque des revendications précédentes, dans lequel ledit véhicule (2) est un véhicule autonome.

11. Système de véhicule (1) selon l'une quelconque des revendications précédentes, dans lequel, si ladite unité de commande électronique (11) échoue à détecter un événement (E), ladite unité de commande télématique (12) est en outre configurée pour envoyer les images (I1) capturées par ledit au moins un capteur de caméra (10) audit serveur (3).

12. Procédé (4), comprenant :
- une capture (E1), par au moins un capteur de caméra (10) d'un système de véhicule (1) d'un véhicule (2), d'images (I1) de l'environnement dudit véhicule (2),
- une détection (E2), par une unité de commande électronique (11) dudit système de véhicule (1), d'un événement externe (E) au moyen d'un modèle d'apprentissage profond principal (M1) sur la base desdites images (I1),
- une détermination (E3), par ladite unité de commande électronique (11), d'un niveau de prévisibilité (A) dudit événement (E), ledit niveau de prévisibilité (A) étant généré par ledit modèle d'apprentissage profond principal (M1) pour catégoriser les différents événements (E), lesdits événements comprenant des accidents, des barrages routiers, des animaux sur la route ou sur la chaussée, des piétons sur la route ou sur la chaussée, des obstacles sur la route ou sur la chaussée et des véhicules de sauvetage sur la route,
- une transmission (E4), par ladite unité de commande électronique (11), dudit événement (E) à une unité de commande télématique (12) dudit système de véhicule (1) si son niveau de prévisibilité (A) est supérieur à un niveau défini (L1),
- la réception (E5), par ladite unité de commande télématique (12), dudit événement (E),
- la diffusion (E6), par ladite unité de commande télématique (12), d'un message décentralisé de notification d'environnement (DENM) relatif audit événement (E) par l'intermédiaire d'une communication de véhicule à véhicule (V2V) à d'autres véhicules (6) dans l'environnement du véhicule (2) et/ou par l'intermédiaire d'une communication de véhicule à infrastructure (V2I) à des infrastructures (7) dans l'environnement du véhicule (2),
- la transmission (E7), par ladite unité de commande télématique (12) à un serveur (3), d'au moins une image (I1) et de données détaillées (D) dudit événement (E), lesdites données détaillées (D) dudit événement (E) comprenant une étiquette (LB) dudit événement (E), une localisation (LO) dudit événement (E), un horodatage (TI) dudit événement (E) et le niveau de prévisibilité (A) dudit événement (E),
- la réception (E8), par ladite unité de commande télématique (12), d'informations de validation principales (30) en provenance dudit serveur (3), lesdites informations de validation principales (30) étant générées par un modèle d'apprentissage profond secondaire (M2), et l'annulation (E9), par ladite unité de commande télématique (12), de ladite diffusion si ledit événement (E) n'est pas validé,
- si ledit événement (E) est validé, la réception (E10), par ladite unité de commande télématique (12) en provenance dudit serveur (3), d'une instance mise à jour (M3) dudit modèle d'apprentissage profond principal (M1) et la transmission (E11) de ladite instance mise à jour (M3) à une unité de commande électronique (11) dudit système de véhicule (1) pour la mise à jour dudit modèle d'apprentissage profond principal (M1).
